# EUROPÄISCHE PATENTSCHRIFT

(11) **EP 1 145 933 B1**
(45) Veröffentlichungstag und Bekanntmachung des Hinweises auf die Patenterteilung: **20.10.2004**
(21) Anmeldenummer: 01107835.9
(22) Anmeldetag: 06.04.2001
(51) Int. Cl.: B62D 1/06

(54) **Fahrzeuglenkrad**
Vehicle steering wheel
Volant de véhicule

(30) Priorität: 11.04.2000 DE 20006621 U
(43) Veröffentlichungstag der Anmeldung: 17.10.2001
(73) Patentinhaber: TRW Automotive Safety Systems GmbH, 63743 Aschaffenburg (DE)
(72) Erfinder: Fleckenstein, Jupp, 63856 Bessenbach (DE)
(74) Vertreter: Kitzhofer, Thomas, Dipl.-Ing.

(56) Entgegenhaltungen:
- EP-A- 0 849 127
- US-A- 2 623 405
- US-A- 6 012 354
- PATENT ABSTRACTS OF JAPAN vol. 009, no. 316 (M-438), 12. Dezember 1985 (1985-12-12) & JP 60 151174 A (NIHON PURASUTO KK), 9. August 1985 (1985-08-09)

## Beschreibung

Die Erfindung betrifft ein Fahrzeuglenkrad nach dem Oberbegriff des Anspruchs 1.

Dekorsegmente werden zunehmend von Fahrzeugkäufern gewünscht, denn sie geben dem Fahrzeuglenkrad ein edleres Aussehen. Die Befestigung dieser Dekorsegmente, die separate Teile bilden, am Fahrzeuglenkrad ist aufwendig. Hierzu sind beispielsweise im Stand der Technik Lösungen mit eingesetzten Zusatzbefestigungsmitteln wie Klammern vorgesehen, wodurch sich aber die Teileanzahl erhöht. Auch die Montage ist aufwendiger.

Aus der gattungsgemäßen US-A-2 623 405 ist ein Fahrzeuglenkrad bekannt, das ein Dekorsegment aufweist, welches längs seiner freien Ränder jeweils einen umlaufendenden Wulst aufweist. Die Wülste ragen in Ausnehmungen, die in einem Kunststoffmantel des Skeletts vorgesehen sind.

Die Erfindung schafft ein Fahrzeuglenkrad, dessen Dekorsegment sehr einfach und sicher am Lenkrad befestigt werden kann. Die wird durch ein Lenkrad mit dem Merkmalen des Anspruchs 1 erreicht.

Beim erfindungsgemäßen Fahrzeuglenkrad sind keine Zusatzteile zur Befestigung des Dekorsegments vorgesehen, denn das Dekorsegment selbst zusammen mit Ausnehmungen in der Skelettummantelung bilden eine Rastverbindung. Das Dekorsegment muß also entsprechend flexibel ausgebildet sein, damit es beim Aufsetzen auf die Skelettummantelung elastisch aufgeweitet wird und schließlich, sobald die Ausnehmungen von den Rastnasen erreicht wird, zurückfedert. Die Skelettummantelung, die außerhalb des Dekorsegments den von außen sichtbaren Teil des Lenkradkranzes bildet, hat üblicherweise im Bereich des Dekorsegments eine Vertiefung oder eine geringere radiale Dicke, um einen möglichst absatzfreien Übergang zwischen dem Dekorsegment und dem von außen sichtbaren Teil der Skelettummantelung zu erreichen. Indem das Dekorsegment als Halbschale ausgebildet ist, welche die üblicherweise weiche Ummantelung umgreift, wird diese komprimiert. Es besteht dadurch nicht die Gefahr, daß die Ummantelung ausreißt. Die Rastverbindung läßt sich dadurch verbessern, daß mehrere voneinander in Umfangsrichtung beabstandete Rastnasen an jedem Rand vorgesehen sind. Die Rastnasen wechseln sich an gegenüberliegenden Rändern in axialer Richtung gesehen ab. Das bedeutet, daß im Querschnitt durch den Lenkradkranz gesehen, nur immer eine Rastnase an einem Rand sichtbar ist. Damit erhält das Dekorsegment eine höhere Flexibilität für die Montage.

Gemäß der bevorzugten Ausführungsform hat das Dekorsegment auch Speichenansätze, so daß es als großflächiges Einzelteil ausgebildet ist.

Die Skelettummantelung besteht aus Holz, Metall oder Kunststoff oder der Umschäumung. Die Ausnehmungen sind dann im Holz, Metall, Kunststoff oder sogar in der Umschäumung vorgesehen. Die Umschäumung kann in diesem Zusammenhang durchaus beledert sein, wobei die Belederung im sichtbaren Bereich der Skelettummantelung vorgesehen ist.

Auch das Dekorsegment kann beledert sein, wodurch sich ein Aufbringen der Belederung vereinfachen läßt. Das Leder ist nämlich auf einer Kunststoffschale befestigt, und diese Kunststoffschale und das Leder bilden das Dekorsegment, welches nur noch mittels der Rastverbindung an der Skelettummantelung befestigt wird.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
Fig. 1 eine Draufsicht auf ein erfindungsgemäßes Lenkrad,
Fig. 2 eine Längsschnittansicht durch das erfindungsgemäße Lenkrad,
Fig. 3 eine Querschnittsansicht durch den Lenkradkranz im Bereich des Dekorsegmentes, und
Fig. 4 eine Querschnittsansicht durch den Lenkradkranz im Bereich des Dekorsegments, gemäß einer weiteren Ausführungsform.

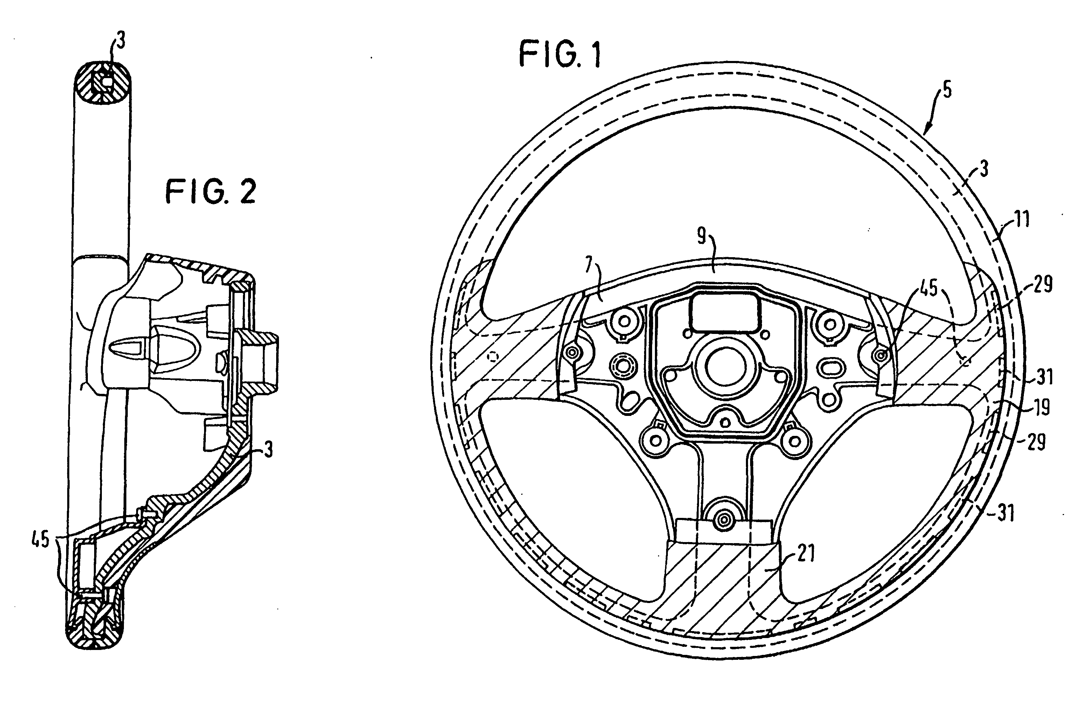

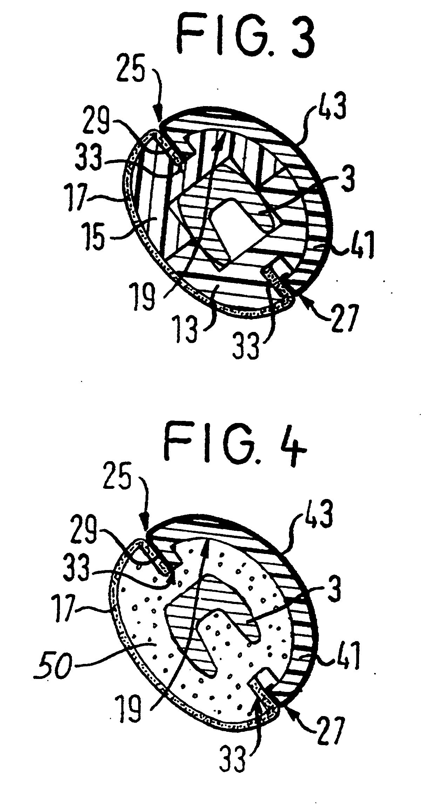

In Fig. 1 ist ein Fahrzeuglenkrad in Draufsicht dargestellt, welches ein Lenkradskelett 3 aufweist, das sich durch den Lenkradkranz 5 und über die sogenannten Speichen 7 bis zur Nabe 9 erstreckt. Das Skelett 3 ist im Bereich des Lenkradkranzes 5 und der Speichen 7 von einer von außen sichtbaren Skelettummantelung 11 umgeben. Die Skelettummantelung 11kann beispielsweise eine aus mehreren Schalen aus Holz bestehende Ummantelung sein oder eine einteilige Umschäumung 50 (siehe Fig. 4). In Fig. 3 ist die Ummantelung als aus mehreren Kunststoffteilen 13, 15 bestehend dargestellt, die im sichtbaren Bereich mit einer Belederung 17 versehen ist. Auf der Rückseite der Speichen kann die Skelettummantelung beispielsweise durch eine Umschäumung gebildet sein oder durch die Kunststoffteile 13, 15 oder zusätzliche Kunststoffteile. Ein großflächiges Dekorsegment 19, welches in Fig. 1 schraffiert dargestellt ist, bedeckt die Innenseite des Lenkradkranzes 5 von oberhalb der beiden gegenüberliegenden Speichen bis zur senkrechten Speiche. Das Dekorsegment 19 hat einstückig angeformte Speichenansätze 21 und bedeckt damit auch die radial äußeren Bereiche der Speichen.

Fig. 3 ist am besten der Aufbau des Dekorsegments 19 zu entnehmen. Dieses ist im Querschnitt gesehen eine C-förmige Halbschale von klammerförmiger Gestalt. Die freien Ränder 25, 27 haben einwärtsragende Rastnasen 29, 31, die in Ausnehmungen 33 in der Skelettummantelung 11 ragen. An jedem freien Rand 25, 27 sind, in axialer Richtung gesehen, mehrere voneinander in Umfangsrichtung beabstandete Rastnasen 29 bzw. 31 vorgesehen. Die Rastnasen auf beiden Rändern wechseln, in axialer Richtung gesehen, einander ab, wie in Fig. 1 gezeigt.

Die Ausnehmungen 33 in der Skelettummantelung bilden zusammen mit den Rastnasen 29, 31 eine Rast- oder Schnappverbindung.

Das Dekorsegment 19 ist elastisch ausgebildet und besteht aus einer Kunststoffschale 41, die eine außenseitige Belederung 43 hat. Die Belederung erstreckt sich über die freien Ränder bis in das Innere der Ausnehmungen 33, so daß von außen kein freier Rand der Belederung 43 sichtbar ist.

Das Dekorsegment 19 wird einfach von oben auf die Skelettummantelung 11 aufgesetzt. Die Skelettummantelung ist im Bereich des Dekorsegments mit einer geringeren radialen Dicke ausgestattet, damit ein absatzloser Übergang zum sichtbaren Bereich der Skelettummantelung gewährleistet ist.

Selbstschneidende Schrauben 45 können ferner vorgesehen sein, um als zusätzliche Sicherung für die Befestigung des Dekorsegments 19 an der Skelettummantelung zu sorgen.

Das Dekorsegment kann selbstverständlich auch aus Holz oder mit einer Holzaußenschicht versehen sein. Ebenso muß die Skelettummantelung nicht beledert sein, sie kann auch lediglich, wie bei kostengüstigen Lenkrädern üblich, aus einer Umschäumung bestehen, ähnlich wie in Fig. 4 gezeigt, die dann entsprechende Ausnehmungen 33 aufweist. Darüber hinaus kann die Skelettummantelung auch aus schalenförmigen Holzteilen bestehen, die entsprechend der in Fig. 3 dargestellten Schalen 13, 15 ausgebildet sind.

## Patentansprüche

1. Fahrzeuglenkrad, mit
einem Skelett (3),
einer von außen sichtbaren Skelettummantelung (11) im Bereich des Lenkradkranzes (5) und
wenigstens einem, einen Teil der Skelettummantelung (11) ergänzendenDekorsegment (19), das eine Halbschale (41) von im Querschnitt klammerförmiger Gestalt hat und in Ausnehmungen in der Skelettummantelung verrastet ist,
**dadurch gekennzeichnet, daß** das Dekorsegment (19) an seinen freien Rändern Rastnasen (25, 27) aufweiset, mit denen es in Ausnehmungen in der Skelettummantelung verrastet,
wobei mehrere voneinander in Umfangsrichtung beabstandete Rastnasen (25, 27) an jedem Rand vorgesehen sind und sich die Rastnasen (25, 27) an gegenüberliegenden Rändern in axialer Richtung gesehen abwechseln.

2. Fahrzeuglenkrad nach dem vorhergehenden Anspruch, **dadurch gekennzeichnet, daß** das Dekorsegment (19) auch Speichenansätze (21) außveist.

3. Fahrzeuglenkrad nach einem der vorhergehenden Ansprüche, **dadurch gekennzeichnet, daß** die Skelettummanteluug (11) aus Holz, Metall, Kunststoff oder einer Umschäumung besteht, die jeweils die Ausnehmungen (33) aufweist.

4. Fahrzeuglenkrad nach Anspruch 3, **dadurch gekennzeichnet, daß** die Umschäumung beledert ist.

5. Fahrzeuglenkrad nach einem der vorhergehenden Ansprüche, **dadurch gekennzeichnet, daß** das Dekorsegment eine belederte Kunststoffschale ist.

6. Fahrzeuglenkrad nach einem der vorhergehenden Ansprüche, **dadurch gekennzeichnet, daß** der nicht vom Dekorsegment abgedeckte Teil der Skelettummantelung mit einem Leder (43) überzogen ist, dessen Ränder zwischen den Rändern des Dekorsegments und der Skelettummantelung (11) geklemmt werden.

## Claims

1. A vehicle steering wheel, comprising
a skeleton (3),
a skeleton covering (11), visible from the exterior, in the region of the steering wheel rim (5), and
at least one decorative segment (19) supplementing a part of the skeleton covering (11), the decorative segment having a half shell (41) having a clip-shaped form in cross-section and being engaged in recesses in the skeleton covering,
**characterized in that** at its free edges the decorative segment (19) has detent noses (25, 27) by which it is engaged in recesses in the skeleton covering,
several detent noses (25, 27), spaced apart from each other in the peripheral direction, being provided at each edge and the detent noses (25, 27) alternating at opposite edges as seen in the axial direction.

2. The vehicle steering wheel according to the preceding claim, **characterized in that** the decorative segment (19) also has spoke extensions (21).

3. The vehicle steering wheel according to any of the preceding claims, **characterized in that** the skeleton covering (11) consists of wood, metal, plastic, or a foam casing, which in each case has the recesses (33).

4. The vehicle steering wheel according to Claim 3, **characterized in that** the foam casing is covered with leather.

5. The vehicle steering wheel according to any of the preceding claims, **characterized in that** the decorative segment is a plastic shell covered with leather.

6. The vehicle steering wheel according to any of the preceding claims, **characterized in that** the portion of the skeleton covering which is not covered by the decorative segment is clad with a leather (43) the edges of which are clamped between the edges of the decorative segment and the skeleton covering (11).

## Revendications

1. Volant de direction de véhicule, comportant
un squelette (3),
une gaine de squelette (11) visible de l'extérieur, dans la région de la couronne de volant (5), et
au moins un segment décoratif (19) qui complète une partie de la gaine de squelette (11), qui a une demi-coque (41) en forme d'agrafe, en section transversale, et qui est enclenché dans des évidements ménagés dans la gaine de squelette,
**caractérisé en ce que** le segment décoratif (19) présente sur ses bords libres des ergots d'enclenchement (25, 27) par lesquels il est enclenché dans des évidements dans la gaine de squelette,
plusieurs ergots d'enclenchement (25, 27) étant prévus à distance les uns des autres en direction périphérique sur chaque bord et, vu en direction axiale, les ergots d'enclenchement alternant sur des bords opposés.

2. Volant de direction de véhicule selon la revendication précédente, **caractérisé en ce que** le segment décoratif (19) présente aussi des embouts de rayons (21).

3. Volant de direction de véhicule selon l'une des revendications précédentes, **caractérisé en ce que** la gaine de squelette (11) est en bois, en métal, en matière plastique ou en mousse présentant respectivement les évidements (33).

4. Volant de direction de véhicule selon la revendication 3, **caractérisé en ce que** la mousse est recouverte de cuir.

5. Volant de direction de véhicule selon l'une des revendications précédentes, **caractérisé en ce que** le segment décoratif est une coque de matière plastique recouverte de cuir.

6. Volant de direction de véhicule selon l'une des revendications précédentes, **caractérisé en ce que** la partie de la gaine de squelette qui n'est pas recouverte par le segment décoratif est recouverte par du cuir (43) dont les bords sont serrés entre les bords du segment décoratif et la gaine de squelette (11).
